# EUROPEAN PATENT SPECIFICATION

(11) **EP 1 195 318 B1**
(45) Date of publication and mention of the grant of the patent: **29.03.2006**
(21) Application number: 01308474.4
(22) Date of filing: 03.10.2001
(51) Int. Cl.: B62K 7/04

(54) **Cycle with integrated load platform**
Fahrrad mit integrierter Ladeplattform
Bicyclette avec plate-forme de chargement intégrée

(30) Priority: 06.10.2000 GB 0024540
(43) Date of publication of application: 10.04.2002
(73) Proprietor: Godden, David, Shaftesbury, Dorset SP7 8LS (GB)
(72) Inventor: Godden, David, Shaftesbury, Dorset SP7 8LS (GB)
(74) Representative: Jenkins, Peter David

(56) References cited:
- EP-A- 0 780 288
- WO-A-01/68438
- DE-U- 29 610 800
- DE-U- 29 704 860
- GB-A- 309 709
- PATENT ABSTRACTS OF JAPAN vol. 0174, no. 59 (M-1467), 23 August 1993 (1993-08-23) & JP 5 105144 A (YAMAHA MOTOR CO LTD), 27 April 1993 (1993-04-27)

## Description

The invention relates to pedal cycles and particularly to bicycles on which a load carrying platform is provided.

Closest prior art document GB 309709 shows such a bicycle according to the preamble of independent claim 1.

In order to carry loads on a bicycle, proposals have been made for load carrying devices mounted behind the saddle such that weight is over the rear wheel or alternatively front mounted devices have been provided in which load is carried over the front wheel. Both arrangements have problems in relation to the handling of the bicycle particularly when mounted ahead of the handle bars over the front wheel. When loads are positioned on only one side of the rear wheel then uneven weight distribution results. If the load is centrally positioned over either the front wheel or the back wheel then the height of the load is normally sufficiently high as to upset the stability of vehicle with any load of significant weight.

It is an object of the present invention to provide an improved bicycle with a load carrier in which the centre of gravity of the load may be centrally located with a relatively low centre of gravity between the axes of the front and rear wheels.

The invention provides a pedal cycle having a cycle frame as disclosed by the features of independent claim 1.

Preferably said two bars both form a junction with the head tube closely located together at the bottom of the head tube.

Preferably said upper bar extends substantially horizontally from the lower part of the head tube to the rear pillar.

Preferably the rear wheel has a diameter greater than the front wheel, and may be at least 50% greater.

Preferably said load carrying platform comprises a flat base frame with an upstanding front frame with side arms spaced apart on opposite sides of the head tube at their upper ends.

Preferably the side arms are interconnected by one or more cross members towards the upper end of the upstanding front frame, at least one of said cross members being secured to the head tube.

Preferably the side arms form opposite sides of a U-shaped frame with the lower part of the U extending below one or both of said interconnecting bars.

Preferably the upper ends of said side arms provide projections on which one or more bags may be hung.

Preferably the base member of the load carrying platform comprises a flat base
- frame with side arms interconnected by one or more cross members secured to said upper interconnecting bar.

Preferably the side arms of the flat base frame form part of a U-shaped frame with the lower part of the U positioned at the rear of the base frame.

Preferably the base member and the upstanding load support are arranged at right angles with the upstanding load support having a greater height than the length of the base member.

An embodiment of the invention will now be described by way of example and with reference to the accompanying drawings in which:

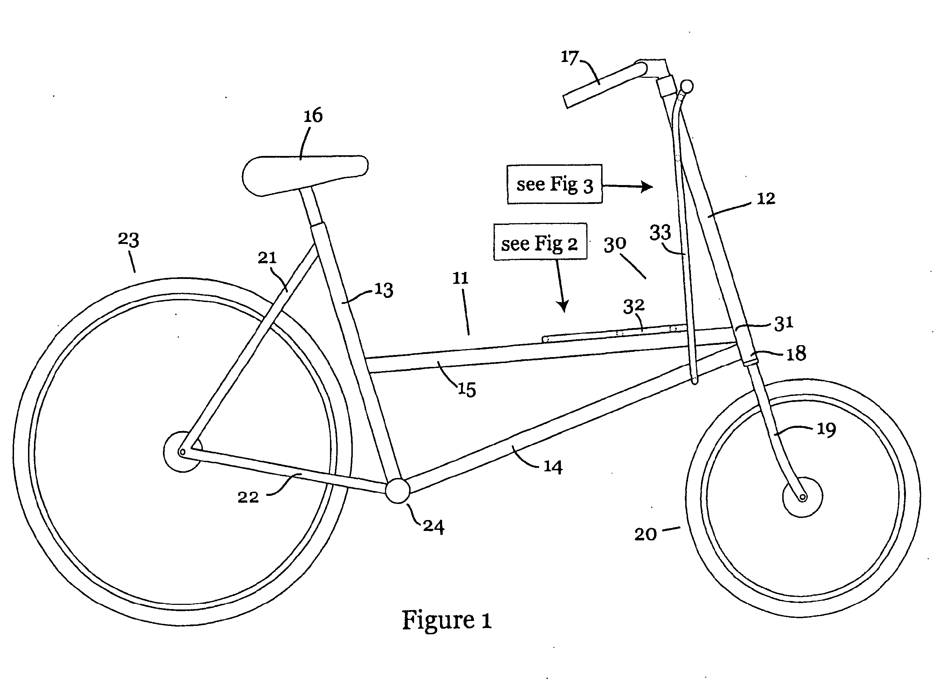

Figure 1 is a side view of a bicycle with a load carrier in accordance with the invention,

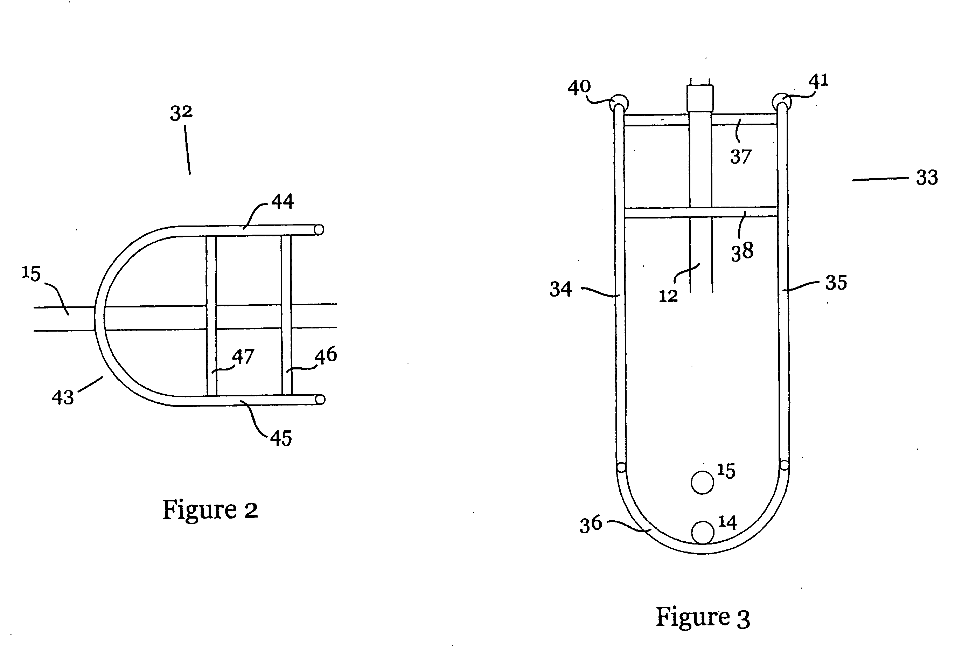

Figure 2 is a plan view of the load carrier of Figure 1, and
Figure 3 is a forward looking view of the vertical frame of the load carrier of Figure 1.

The bicycle of this example has a frame 11 comprising an upstanding front pillar or head tube 12, an upstanding rear pillar 13 and two interconnecting bars 14 and 15 which interconnect the head tube 12 with the rear pillar 13. The two interconnecting bars 14 and 15 are arranged one above the other so that the bar 15 acts as a top tube and bar 14 as a bottom tube. A saddle 16 is mounted on top of the rear pillar 15 and handlebars 17 are mounted on top of the head tube 12. The bottom 18 of the head tube 12 has extending below it front forks 19 on which are mounted on a front wheel 20. Behind the rear pillar 13 are mounted two pairs of rear fork members 21 and 22 between which are rotatably mounted the rear wheel 23. The spokes of the front and -rear wheels have been omitted for clarity. Similarly the pedals, chainset and chain have been omitted from their axis of rotation in the bottom bracket 24.

In this example the rear wheel has a diameter which is at least 50% greater than the diameter of the front wheel and in the example shown the rear wheel has a diameter of 622 mm whereas the front wheel has a diameter of 406 mm. In order to provide support for a load carrier 30, the top tube 15 extends substantially horizontally between the head tube 12 and the rear pillar 13. The front end of the top tube 15 joins the head tube 12 at junction 31 adjacent the bottom end of the head tube 12. Similarly the bottom tube 14 which extends from the bottom bracket 24 joins the bottom of the head tube closely adjacent the front end of the top tube 15. By use of a smaller front wheel diameter and positioning the front end of the top tube 15 adjacent the bottom of the head tube 12, it is possible to arrange for the top tube 15 to be substantially horizontal and to have a low centre of gravity in the cycle frame 11.

The load carrying platform 30 comprises a substantially horizontal base member 32 and an upstanding front support 33. The two parts 32 and 33 of the load carrying frame are joined together in a generally L-shaped form with the member 32 extending substantially horizontally and resting in secured engagement with the top of the top tube 15. The substantially vertical frame 33 is formed as a U-shaped tubular framework having two side arms 34 and 35 with a lower semicircular portion 36. Cross members 37, 38 interconnect the two side arms 34 and 35. The semicircular portion 36 extends down below the bottom tube 14. At its upper end, the head tube 12 passes between the cross members 37 and 38 so that member 38 lies behind the head tube while member 37 is located in front of the head tube. These cross bars are secured to the head tube so as to provide additional strength to the upstanding part of the head tube nearer the handle bars 17. Each of the upstanding arms 34 and 35 has at its upper end a projecting spur with a protective rounded knob 40 and 41 on which bags may be directly hung. Downward sliding movement is prevented by the cross member 37. The horizontal base member 32 similarly comprises a U-shaped tubular frame 43 which has two side arms 44 and 45 symmetrically located on opposite sides of the upper bar 15. The two side arms 44 and 45 are interconnected by two cross members 46 and 47 which both rest on and are secured to the upper bar 15.

It will be appreciated that in use the load carrying support 30 provides not only a flat base but also a vertical upstand preventing forward or reverse movement of any load carried on the platform as the load may be secured by releasable ties to both the flat base member 32 and the vertical upstand 33.

In practice, the platform provides a convenient mounting location for a variety of loads such as boxes or bags. The load area is in front of the cyclist where it may be seen by the cyclist but is behind the head tube 12 so as to share the weight between the two wheels and avoid undesirable handling characteristics. By lowering the top tube 15 and the use of the small diameter front wheel 20, the centre of gravity of the load is lowered thereby improving the instability when cycling. By mounting the load between the wheels the load moves less violently in the vertical plane as the wheels pass over irregularities in the road.

The invention is not limited to the details of the foregoing example. In the particular example, the wheel base of the vehicle has been increased from normal to approximately 125 cm. However other wheel base dimensions may be used. Similarly the specific dimensions for the diameters of the front and rear wheels set out above for the preferred example may be changed.

## Claims

1. A pedal cycle having a cycle frame (11) including an upstanding rear pillar (13) on which a saddle (16) is mounted, an upstanding head tube (12) on which the handle bars (17) are mounted, and at least two interconnecting bars an upper bar (15) and a lower bar (14) extending between the head tube (12) and rear pillar (13), one above the other to interconnect the head tube and rear pillar, a front wheel located between the front forks (19) extending below said front pillar and a rear wheel located between rear forks (21) extending rearwardly from said rear pillar, said upper bar providing a support for a load carrying platform (30) which has a base member (32) attached to and extending along part of said upper bar (15) rearwardly of said head tube (12) **characterized in that** the upper (15) of said two bars is being mounted in a position towards the bottom of the frame so as to interconnect with the head tube (12) adjacent the bottom of the head tube and that an upstanding front support (33) is extending from the base member to a connection on an upper part of said head tube, and is providing two attachment points (40, 41) suitable for bags at its upper outer corners.

2. A cycle according to claim 1 in which said two bars both form a junction with the head tube closely located together at the bottom of the head tube.

3. A cycle according to any one of the preceding claims in which said upper bar extends substantially horizontally from the lower part of the head tube to the rear pillar.

4. A cycle according to any one of the preceding claims in which the rear wheel has a diameter greater than the front wheel.

5. A cycle according to any one of the preceding claims in which said load carrying platform (30) comprises a flat base frame (32) with an upstanding front frame (33) with side arms (35, 34) spaced apart on opposite sides of the head tube reval at their upper ends.

6. A cycle-according to claim 5 in which the side arms (35, 34) are interconnected by one or more cross member (37, 38) towards the upper end of the upstanding front frame, at least one of said cross members being secured to the head tube.

7. A cycle according to claim 5 or claim 6 in which said side arms (35, 34) form opposite sides of a U-shaped frame with the lower part of the U extending below one or both of said interconnecting bars (36).

8. A cycle according to any one of claims 5 to 7 in which the upper ends of said side arms provide projections (40, 41) on which one or more bags may be hung.

9. A cycle according to any one of the preceding claims in which the base member (32) of the load carrying platform comprises a flat base frame (32) with side arms (44, 45) interconnected by one or more cross members (46, 47) secured to said upper interconnecting bar (15).

10. A cycle according to claim 9 in which the side arms (44, 45) of the flat base frame (32) form part of a U-shaped frame (43) with the lower part of the U positioned at the rear of the base frame.

11. A cycle according to any one of the preceding claims in which the base member (32) and the upstanding load support are arranged at right angles with the upstanding load support having a greater height than the length of the base member.

## Patentansprüche

1. Fahrrad mit einem Fahrradrahmen (11), umfassend eine stehende hintere Säule (13), an der ein Sattel (16) montiert ist, ein stehendes Steuerrohr (12), an dem die Lenkstange (17) montiert ist, und mindestens zwei Verbindungsstangen, welche sind eine Oberstange (15) und eine Unterstange (14), die sich zwischen dem Steuerrohr (12) und der hinteren Säule (13) übereinanderliegend erstrecken, um das Steuerrohr und die hintere Säule miteinander zu verbinden, ein Vorderrad, angeordnet zwischen der sich unterhalb der vorderen Säule erstreckenden Vordergabel (19), und ein Hinterrad, angeordnet zwischen einer sich von der hinteren Säule nach hinten erstreckenden Hintergabel (21), wobei die Oberstange einen Halt für eine Lastenträgerplattform (30) bereitstellt, welche ein Basisglied (32) aufweist, das mit der Oberstange (15) verbunden ist und sich entlang eines Teils derselben hinter dem Steuerrohr (12) erstreckt, **dadurch gekennzeichnet, dass** die obere (15) der beiden Stangen in einer Position nach dem unteren Teil des Rahmens zu so montiert ist, dass sie mit dem Steuerrohr (12) benachbart zu dem unteren Teil des Steuerrohrs verbunden ist, und dass ein stehender vorderer Halter (33) sich von dem Basisglied zu einer Verbindung in einem oberen Teil des Steuerrohrs erstreckt und zwei Befestigungspunkte (40, 41), welche für Taschen geeignet sind, an seinen oberen äußeren Ecken bereitstellt.

2. Fahrrad nach Anspruch 1, wobei die beiden Stangen - eng zusammenliegend in dem unteren Teil des Steuerrohrs - eine Verbindungsstelle mit dem Steuerrohr bilden.

3. Fahrrad nach einem der vorstehenden Ansprüche, wobei die Oberstange sich im Wesentlichen horizontal von dem unteren Teil des Steuerrohrs zu der hinteren Säule erstreckt.

4. Fahrrad nach einem der vorstehenden Ansprüche, wobei das Hinterrad einen größeren Durchmesser als das Vorderrad aufweist.

5. Fahrrad nach einem der vorstehenden Ansprüche, wobei die Lastenträgerplattform (30) einen flachen Basisrahmen (32) mit einem stehenden Vorderrahmen (33) mit Seitenarmen (35, 34), welche auf einander gegenüberliegenden Seiten des Steuerrohrs an ihren oberen Enden voneinander beabstandet sind, umfasst.

6. Fahrrad nach Anspruch 5, wobei die Seitenarme (35, 34) durch ein oder mehrere Querglieder (37, 38) nach dem oberen Ende des stehenden Vorderrahmens zu miteinander verbunden sind, wobei mindestens eines der Querglieder an dem Steuerrohr gesichert ist.

7. Fahrrad nach Anspruch 5 oder Anspruch 6, wobei die Seitenarme (35, 34) einander gegenüberliegende Seiten eines U-förmigen Rahmens bilden, wobei sich der untere Teil des "U" unterhalb einer oder beider Verbindungsstangen (36) erstreckt.

8. Fahrrad nach einem der Ansprüche 5 bis 7, wobei die oberen Enden der Seitenarme Vorsprünge (40, 41) bereitstellen, an die eine oder mehrere Taschen gehängt werden können.

9. Fahrrad nach einem der vorstehenden Ansprüche, wobei das Basisglied (32) der Lastträgerplattform einen flachen Basisrahmen (32) mit Seitenarmen (44, 45) umfasst, welche durch ein oder mehrere Querglieder (46, 47), die an der oberen Verbindungsstange (15) gesichert sind, miteinander verbunden sind.

10. Fahrrad nach Anspruch 9, wobei die Seitenarme (44, 45) des flachen Basisrahmens (32) Teil eines U-förmigen Rahmens (43) bilden, wobei der untere Teil des "U" im hinteren Teil des Basisrahmens positioniert ist.

11. Fahrrad nach einem der vorstehenden Ansprüche, wobei das Basisglied (32) und der stehende Lastenhalter im rechten Winkel angeordnet sind, wobei die Höhe des stehenden Lastenhalters größer ist als die Länge des Basisgliedes.

## Revendications

1. Bicyclette ayant un cadre (11) de bicyclette comprenant une colonne arrière montante (13) sur laquelle une selle (16) est montée, un tube avant montant (12) sur lequel le guidon (17) est monté, et au moins deux barres de liaison, une base supérieure (15) et une barre inférieure (14), s'étendant entre le tube avant (12) et la colonne arrière (13), l'une au-dessus de l'autre pour relier entre eux le tube avant et la colonne arrière, une roue avant placée entre les fourches avant (19) s'étendant en dessous de ladite colonne avant et une roue arrière placée entre les fourches arrière (21) s'étendant en arrière de ladite colonne arrière, ladite barre supérieure procurant un support pour une plate-forme (30) de charge qui comporte un élément de base (32) relié à et s'étendant le long d'une partie de, ladite barre supérieure (15) en arrière dudit tube avant (12), **caractérisée en ce que** la plus haute (15) desdites deux barres est montée dans une position située vers le bas du cadre afin d'être reliée au tube avant (12) à proximité immédiate du bas du tube avant, et **en ce qu'**un support avant montant (33) s'étend de l'élément de base jusqu'à une liaison sur une partie supérieure dudit tube avant, et procure deux points d'attache (40, 41) convenant à des sacs à ses angles extérieurs supérieurs.

2. Bicyclette selon la revendication 1, dans laquelle lesdites deux barres forment ensemble une jonction avec le tube avant en étant regroupées étroitement au bas du tube avant.

3. Bicyclette selon l'une quelconque des revendications précédentes, dans laquelle ladite barre supérieure s'étend sensiblement horizontalement depuis la partie inférieure du tube avant jusqu'à la colonne arrière.

4. Bicyclette selon l'une quelconque des revendications précédentes, dans laquelle la roue arrière a un diamètre plus grand que la roue avant.

5. Bicyclette selon l'une quelconque des revendications précédentes, dans laquelle ladite plate-forme (30) de chaque charge comporte un cadre de base plat (32) avec un cadre avant montant (33) comportant des bras latéraux (35, 34) espacés sur des côtés opposés du tube avant à leurs extrémités supérieures.

6. Bicyclette selon la revendication 5, dans laquelle les bras latéraux (35, 34) sont reliés entre eux par un ou plusieurs éléments transversaux (37, 38) vers l'extrémité supérieure du cadre avant montant, au moins l'un desdits éléments transversaux étant fixé au tube avant.

7. Bicyclette selon la revendication 5 ou la revendication 6, dans laquelle lesdits bras latéraux (35, 34) forment des côtés opposés d'un cadre en forme de U, la partie inférieure du U s'étendant en dessous de l'une desdites barres de liaison (36) ou des deux.

8. Bicyclette selon l'une quelconque des revendications 5 à 7, dans laquelle les extrémités supérieures desdits bras latéraux comportent des saillies (40, 41) sur lesquelles un ou plusieurs sacs peuvent être accrochés.

9. Bicyclette selon l'une quelconque des revendications précédentes, dans laquelle l'élément de base (32) de la plate-forme de charge comporte un cadre de base plat (32) avec des bras latéraux (44, 45) reliés entre eux par un ou plusieurs éléments transversaux (46, 47) fixés à ladite barre supérieure (15) de liaison.

10. Bicyclette selon la revendication 9, dans laquelle les bras latéraux (44, 45) du cadre de base plat (32) forment une partie d'un cadre (43) en forme de U, la partie inférieure du U étant positionnée à l'arrière du cadre de base.

11. Bicyclette selon l'une quelconque des revendications précédentes, dans laquelle l'élément de base (32) et le support de charge montant sont agencés à angle droit, le support de charge montant ayant une hauteur plus grande que la longueur de l'élément de base.
